# EUROPEAN PATENT APPLICATION

(11) **EP 4 492 275 A1**
(43) Date of publication of application: **15.01.2025**
(21) Application number: 23306206.6
(22) Date of filing: 13.07.2023
(51) Int. Cl.: G06F 30/12, G06F 16/29, G06F 30/31, G06T 7/50, H02J 3/00, G06F 113/04

(54) **A REPRESENTATION SYSTEM AND A METHOD FOR PROVIDING A REPRESENTATION OF AN INSTALLED CABLE INFRASTRUCTURE**

(71) Applicant: Nexans, 92400 Courbevoie (FR)
(72) Inventor: DOEDENS, Espen, 1788 HALDEN (NO)
(74) Representative: Ipsilon

(57) **Abstract**

The present invention relates to a representation system (30) and a method for providing a representation (306) of an installed cable infrastructure (20), wherein the cable infrastructure (20) comprises a plurality of cables (21) and cable components (22, 23, 24, 25) connected to each other. The representation system (30) comprises a 3D capturing device (301) for providing a 3D image (302) of at least one of the cables (21) and/or at least one of the cable components (22, 23, 24, 25) of the cable infrastructure (20). The representation system (30) also comprises a computing device (303) in which a cable routing map (309) for the cable infrastructure (20) is stored. The computing device (303) is configured to create the representation (306) of the cable infrastructure (20) by using information from the 3D image (302) together with information from the cable routing map (309) for the at least one of the cables (21) and/or the at least one of the cable components (22, 23, 24, 25).

The representation system (30) also comprises a user interface (307) configured to visualize the representation (306) of the cable infrastructure (20).

## Description

### TECHNICAL FIELD

The present invention relates to a representation system for providing a representation of an installed cable infrastructure. The present invention also relates to a method for providing a representation of an installed cable infrastructure.

### BACKGROUND

High voltage extruded cables and the major accessories (joint, terminations) are generally acknowledged to be reliable and mostly immune from weather effects or other environmental impacts. However, when failures do occur, the restoration efforts may be lengthy, and it may be a challenge to locate the point of failure and also the cause of failure.

The quality control (QC) procedures of cable accessory manufacturing and installation, as well as training associated with such operations, involves today proper monitoring of operator skill level and reliance on high quality workmanship.

The applicant has thus developed a simple and robust tool for quality control that delivers increased reliability. This system uses laser scanning of cables and cable accessory to inspect the quality of cables, cable ends, cable accessory and other components during and after manufacturing, and before and after installation in a grid or other cable infrastructure. The term cable infrastructure describes in this document a grid or network of several cables of varying length and with varying configuration, where the cables are connected together and to terminals or other end stations and which comprises components necessary for the cable infrastructure to work.

Also, over the last years, non-physics based digital twins, and physics based digital twins have been developed for monitoring and providing information regarding cables and cable accessories.

There is, however, today no easy way to know in detail if a finalized cable infrastructure actually ended up as planned. In other words, there may be some deviations between the planned system and the final installed system, in particular in the details.

One object of the present invention is to provide an overview of a final installed system.

### SUMMARY OF THE INVENTION

The present invention relates to a representation system for providing a representation of an installed cable infrastructure, wherein the cable infrastructure comprises a plurality of cables and cable components connected to each other.

The representation system comprises a 3D capturing device for providing a 3D image of at least one of the cables and/or at least one of the cable components of the cable infrastructure and the representation system comprises a computing device in which a cable routing map for the cable infrastructure is stored, wherein the computing device is configured to:
- store the 3D image of at least one of the cables and/or at least one of the cable components together with a specific location for the 3D image;
- associate the at least one of the cables and/or the at least one of the cable components from the 3D image with their corresponding cable or cable components in the cable routing map based on the specific location of the 3D image;
- create the representation of the cable infrastructure by using information from the 3D image together with information from the cable routing map for the at least one of the cables and/or the at least one of the cable components;

The representation system comprises a user interface configured to visualize the representation of the cable infrastructure.

By the term "3D (three dimensional) image" it should be understood representation of a 3D object. The representation may be in the form of pixels vectors, a mesh, a point cloud, with or without color for each pixel, or along with a texture map, enabling a user to visually inspect the representation and get information from the representation.

The specific location of the 3D image can be provided by the 3D capturing device itself, for example can the 3D capturing device comprise a GPS device or other localization means or be connected to such a device. Alternatively, the specific location of the 3D image can be provided manually by an operator, for example by using a GPS device. The specific location for the 3D image may be integrated in the 3D image as separate data which can be recognized by the computing device.

By the term "cable routing map" it should be understood a schematic presentation of how the cable infrastructure is designed, ie. how many and how long cables are in the cable infrastructure, what type of cable, what type of cable components and where they are arranged in relation to each other, i.e. how cables and cable components are connected to each other etc. The cable routing map comprises location information for the cables and cable components in the cable infrastructure. The location information may be related to a global or local reference system.

By "associate" it should be understood that the computing device analyzes the 3D image and the cable routing map to determine which of the at least one of the cables and/or the at least one of the cable components in the cable routing map is imaged in 3D image.

The representation system can be configured to provide a sequence of 3D images of the at least one of the cables and/or at least one of the cable components of the cable infrastructure at different points in time, and the computing device can further be configured to:
- store the 3D image of the at least one of the cables and/or the at least one of the cable components together with a time parameter representing the point in time at which the 3D image was provided by the 3D capturing device, and
- create the representation of the cable infrastructure by using information from the sequence of 3D images together with information from the cable routing map for the at least one of the cables and/or the at least one of the cable components.

The computing device can further be configured to:
- store an electric drawing of at least one of the cables and/or the at least one of the cable components;
- associate the at least one of the cables and/or the at least one of the cable components of the electric drawing together with their corresponding cable or cable components of the cable routing map, and
- create the representation of the cable infrastructure by using information from the electric drawing 10 together with information from the cable routing map for the at least one of the cables and/or the at least one of the cable components.

The term "electric drawing" should be understood as a drawing of the cable circuit, ie the electric design of the cable or cable component, and/or one or more circuit diagrams of one, some or all the cables and cable components in the cable infrastructure, ie. the electric drawings may outline the electric design of the cable infrastructure.

According to the above definitions, the cable routing map different from the electric drawing, even though both the cable routing map and the electric drawing both contains information about cables and cable components.

The computing device can be configured to:
- receive an alarm message and associate the alarm message with at least one of the cables and/or at least one of the cable components, and
- create the representation of the cable infrastructure by using the alarm message together with information from the cable routing map for the at least one of the cables and/or the at least one of the cable components.

The user interface may comprise input means. Input means can be any kind of device which can be used by user or operator to input information related to one or several of the cables and/or cable components in the cable infrastructure, such as a keyboard, a connector or other signal receiving means that can connect the user interface, and thereby the computing device to external devices to supply further information from external systems, etc.

The computing device can be configured to change the scale of the representation of the cable infrastructure, for example by receiving user information via the user interface regarding the user's scaling need, and the user interface can therefore be configured to visualize the scaled representation of the cable infrastructure.

The computing system can further be configured to:
- store user information related to at least one of the cables and/or at least one of the cable components, where the user information is received via the user interface,
- associate the user information related to at least one of the cables and/or the at least one of the cable components with their corresponding cable or cable components of the cable routing map, and
- create the representation of the cable infrastructure by using information from the user information related to at least one of the cables and/or at least one of the cable components together with information from the cable routing map for the at least one of the cables and/or the at least one of the cable components.

The representation system may comprise at least one sensor for monitoring thermal and/or electrical properties of at least one of the cables and/or at least one of the cable components of the cable infrastructure.

The computing device may be configured to store sensor data from the at least one sensor for the at least one cable and/or the at least one cable component.

The computing device may further be configured to:
- use the sensor data from the at least one sensor to simulate thermal and/or electrical fluxes in the at least one of the cables and/or at least one of the cable components;
- store the simulated thermal and/or electrical fluxes together with the specific location for the at least one sensor;
- associate the simulated thermal and electrical fluxes for the at least one of the cables and/or the at least one of the cable components with their corresponding cable or cable components of the cable routing map based on the specific location of the at least one sensor and
- create the representation of the cable infrastructure by using information from the simulated thermal and/or electrical fluxes together with information from the cable routing map for the at least one of the cables and/or the at least one of the cable components.

The computing device can further be configured to:
- use the sensor data from the at least one sensor to simulate thermal and/or electrical fluxes in the at least one of the cables and/or at least one of the cable components;
- perform digital twin modelling of the at least one cable and/or cable components based on the sensor data from the at least one sensor, and the simulated thermal and electrical fluxes and generate a digital twin, and
- use the digital twin to perform monitoring of the at least one cable and/or the at least one cable component of the cable infrastructure.

A digital twin is a digital representation of an intended or actual real-world physical product, system, or process that serves as the effectively indistinguishable digital counterpart of it for practical purposes, such as simulation, integration, testing, monitoring, and maintenance. The digital twin has been intended from its initial introduction to be the underlying premise for Product Lifecycle Management and exists throughout the entire lifecycle, create, build, operate/support, and dispose, of the physical entity it represents. The digital twin can and does often exist before there is a physical entity.

Once informed with such data, the virtual model can be used to run simulations, study performance issues and generate possible improvements, all with the goal of generating valuable insights - which can then be applied back to the original physical object.

While such a solution can interpret the measured signals and provide a health indicator for the cable infrastructure operator, they do not include the thermoelectric physics of the cable infrastructure. Therefore, physics-based digital twins, which include a live simulation of thermal and electrical fluxes in the cable infrastructure, can provide better insights and improve the interpretation of the measured data.

Physics based will in this context mean a model that takes into account the electrothermal fluxes and phenomena of the cable infrastructure but is not reserved to only such properties. The physics-based digital twin solution takes into account the physical characteristics of the system/device and gives thus a more specific model of the system/device to be monitored.

In this way, the representation system may also comprises its own means for monitoring the cable and cable components of the cable infrastructure.

The at least one sensor may also be other types of sensors, such as sensors for measuring stress, strain, movement, bends, etc.

The present invention also relates to a method for providing a representation of an installed cable infrastructure, wherein the cable infrastructure comprises a plurality of cables and cable components connected to each other, and wherein the method comprises the following steps:
- providing a cable routing map for the cable infrastructure;
- providing a 3D image of at least one of the cables and/or at least one of the cable components of the cable infrastructure by using a 3D capturing device;
- storing the 3D image together with a specific location for the 3D image;
- associating the at least one of the cables and/or the at least one of the cable components from the 3D image with their corresponding cable or cable component in the cable routing map based on the specific location of the 3D image;
- creating the representation of the cable infrastructure by using information from the 3D image together with information from the cable routing map for the at least one of the cables and/or the at least one of the cable components; and
- visualizing the representation of the cable infrastructure on a user interface.

The step of providing a 3D image of at least one of the cables and/or at least one of the cable components of the cable infrastructure may comprise the step of:
- providing a sequence of 3D images of the at least one of the cables and/or the at least one of the cable components of the cable infrastructure at different points in time, and the method may further comprise the steps of:
- storing the 3D images in the sequence of 3D images of the at least one of the cables and/or at least one of the cable components together with a time parameter representing the point in time at which each 3D image was captured,
- associating the at least one of the cables and/or the at least one of the cable components from sequence of 3D images with their corresponding cable or cable component in the cable routing map based on the specific location of the 3D image; and
- creating the representation of the cable infrastructure by using information from the sequence of 3D images together with information from the cable routing map for the at least one of the cables and/or the at least one of the cable components.

The method may comprise further steps that provides further information related to the same or other cables or cable components of which the 3D images are captured.

The method may comprise the steps of:
- storing an electric drawing of at least one of the cables and/or at least one of the cable components,
- associating the at least one of the cables and/or the at least one of the cable components of the electric drawing together with their corresponding cable or cable components of the cable routing map, and
- creating the representation of the cable infrastructure by using information from the electric drawings together with information from the cable routing map for the at least one of the cables and/or the at least one of the cable components.

As discussed above, it should be noted that the electric drawing may or may not be of the same cable or cable component of which the 3D images are captured.

It should also be noted that according to the above definitions, the cable routing map is different from the electric drawing, even though both the cable routing map and the electric drawing both contains information about cables and cable components.

The method may further comprise the steps of:
- receiving an alarm message and associate the alarm message with at least one of the cables and/or at least one of the cable components, and
- creating the representation of the cable infrastructure by using the alarm message together with information from the cable routing map for the at least one of the cables and/or the at least one of the cable components.

The method may further comprise the steps of:
- storing user information related to at least one of the cables and/or at least one of the cable components, where the user information is received via the user interface,
- associating the user information related to at least one of the cables and/or the at least one of the cable components with their corresponding cable or cable components of the cable routing map, and
- creating the representation of the cable infrastructure by using information from the user information related to at least one of the cables and/or at least one of the cable components together with information from the cable routing map for the at least one of the cables and/or the at least one of the cable components.

The method may also comprise the steps of:
- storing sensor data from at least one sensor for the at least one cable and/or cable component, and use the sensor data from the at least one sensor to simulate thermal and/or electrical fluxes in the at least one of the cables and/or at least one of the cable components;
- storing the simulated thermal and/or electrical fluxes together with the specific location for the 3D image;
- associating the simulated thermal and electrical fluxes for the at least one of the cables and/or the at least one of the cable components with their corresponding cable or cable components of the cable routing map based on the specific location of the 3D image; and
- creating the representation of the cable infrastructure by using information from the simulated thermal and/or electrical fluxes together with information from the cable routing map for the at least one of the cables and/or the at least one of the cable components.

According to the above, it is achieved that information from a range of information sources are used alone or in any combination to provide the representation of the cable infrastructure.

The representation system and method for providing a representation described herein provides information of a complete cable infrastructure as-built, and the system can enable monitoring of the components of the whole system and provides assistance in the process of servicing the cable infrastructure.

According to the representation system above, it is achieved a more detailed overview of deviations between the planned system (as defined by cable routing map and/or electric drawings) and final installed cable infrastructure. The more detailed overview will make it easier to localize a fault, to optimize operation of the installed cable infrastructure etc.

When a failure occurs in the system, the system enables the user to localize the failure and to know which component has failed and how this component is linked and connected to the overall system.

### BRIEF DESCRIPTION OF THE DRAWINGS

Figure 1 illustrates schematically an example of a cable infrastructure.
Figure 2 illustrates schematically a representation system for providing a representation of a cable infrastructure.
Figure 3 illustrates an example of a 3D surface geometry measurement of a of a cable.
Figure 4 illustrates schematically an example of a representation of a cable infrastructure provided by a representation system according to the invention.

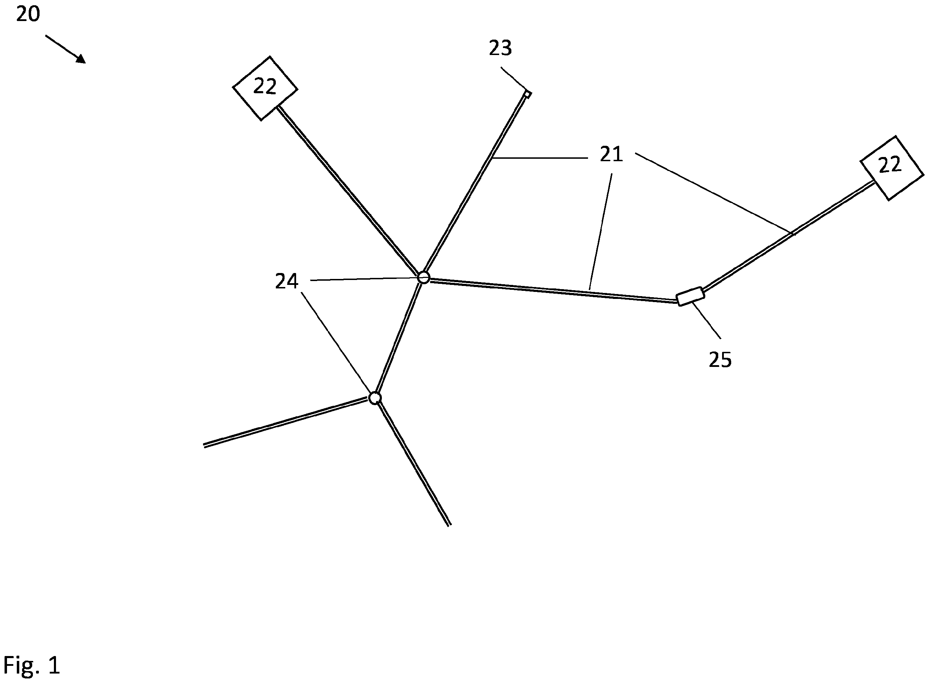

A cable infrastructure 20 is illustrated schematically in figure 1 and comprises a plurality of cables 21 and cable components 22, 23, 24, 25 connected to form the cable infrastructure 20.

Examples of cable infrastructures are local power grids, power transmission systems such as high-voltage direct current (HVDC) electric power transmission systems and high-voltage alternating current (HVAC) electric power transmission systems, signal transmission networks, etc.

The cables 21 may be any kind of cable, such as low voltage cables, high voltage cables, medium voltage cables, signal transmission cables, composite cables, or in some instances a combination of cable types.

The cables may be suspended from transmission towers as air cables, be buried in trenches that are filled in after deployment, run inside buildings, etc.

Examples of cable components 22, 23, 24, 25 are typically referred to as cable accessories, such as connectors, flanges, bolts, etc, as well as joints, branches, terminations etc.

In reality, an installed cable infrastructure will look different than the schematic illustration of fig. 1. The cables may be installed in trenches and will therefore follow the terrain and trenches in which it is installed. Hence, the cables will not be as linear as in fig. 1.

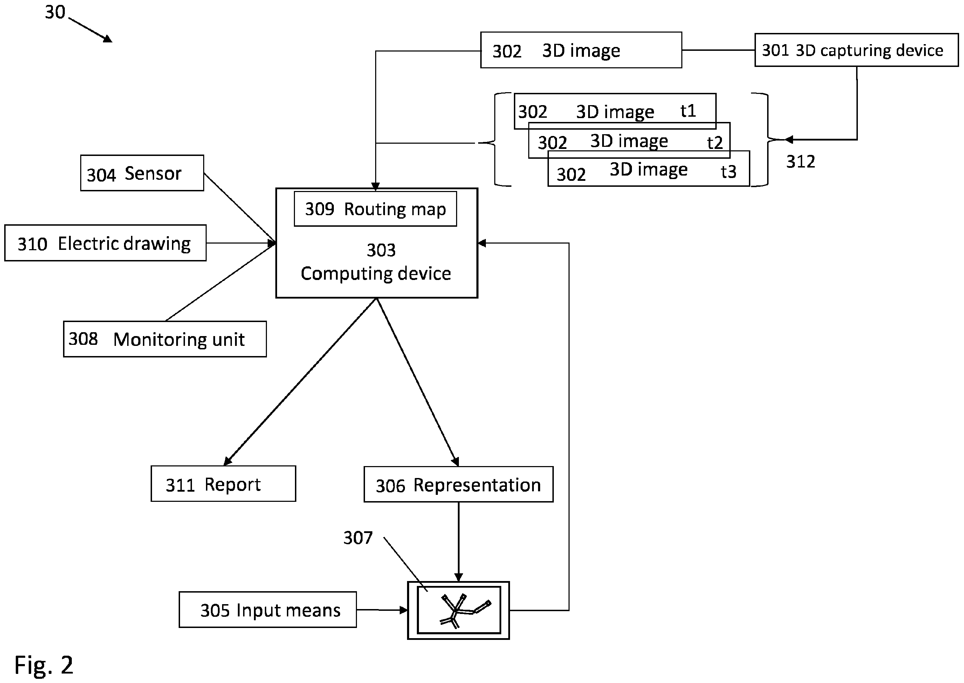

Figure 2 illustrates a representation system 30 for providing a representation 306 of the installed cable infrastructure 20.

The representation system 30 comprises a 3D capturing device 301 such as a 3D scanner for providing a 3D image 302 of at least one of the cables 21 and/or at least one of the cable components 22, 23, 24, or 25 of the cable infrastructure 20. The 3D capturing device 301 may for example utilize laser, LIDAR and/or photogrammetry 3D mapping. The 3D capturing device 301 may be installed on a drone or a vehicle, may be stationary and tripod-supported, or it may be handheld. The 3D capturing device 301 may be operated by an operator on-site or remote. These types of 3D capturing device 301 will provide a 3D image 302 of the installed cable infrastructure 20.

The 3D capturing device 301 can provide the 3D image 302 of the at least one of the cables 21 and/or at least one of the cable components 22, 23, 24, or 25 before and/or after trenching, before and/or after cable installation, before and/or after closing the trench after cable installation, or before and/or after cable installation in a tunnel. The 3D capturing device 301 can comprise or be connected to localization means for providing location information for the cable 21 or cable component 22, 23, 24, 25 of which a 3D image 302 is provided. Such localization means can be a GPS for providing a global location, a compass for determining a direction of the field of view of the 3D capturing device, or any other suitable means for determining a global or local location. The location information can be stored together with the 3D image, or location information can be comprised in the 3D image.

For cable structures installed subsea, submarine surveys can be used for providing the 3D images.

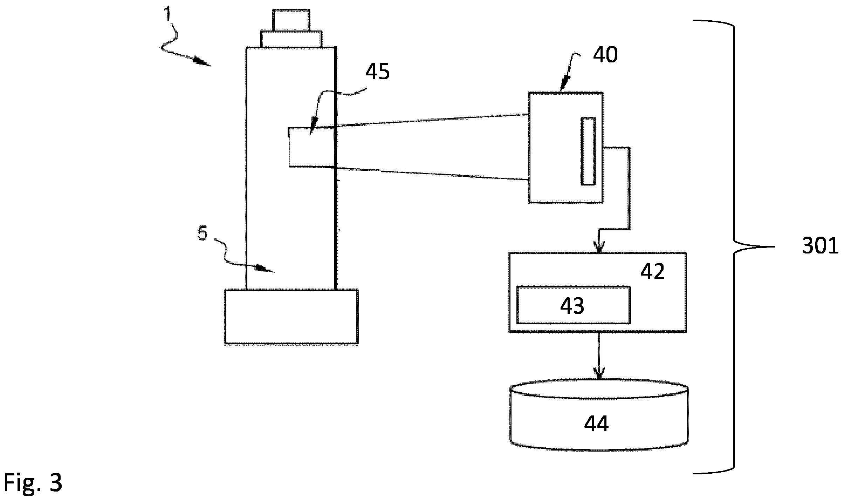

An example of the 3D capturing device 301 will be described more in detail below with reference to fig. 3.

The system 30 further comprises a computing device 303. In the computing device 303 a cable routing map 309 for the cable infrastructure 20 is stored, for example in a memory device comprised in the computing device 303. As described above, the cable routing map 309 is a schematic presentation of how the cable infrastructure 20 is designed, ie. an outline or drawing depicting how many and how long cables are in the cable infrastructure 20, what type of cable, what type of cable components, where the cables 21 and cable components 22, 23, 24, 25 are arranged, and which cables and cable components are connected with each other etc. The cable routing map 309 also comprises information of location of each of the cables 21 and cable components 22, 23, 24, 25 in the cable infrastructure 20. The location information may be related to a global or local reference system.

The cable routing map 309 is typically provided as part of the planning phase of the cable infrastructure 20.

The computing device 303 is configured to receive and store the 3D image 302 of at least one of the cables 21 and/or at least one of the cable components 22, 23, 24, 25 together with a specific location for the 3D image 302 and to associate the at least one of the cables 21 and/or the at least one of the cable components 22, 23, 24, 25 from the 3D image 302 with their corresponding cable or cable component in the cable routing map 309 based on the specific location of the 3D image 302.

The computing device 303 is further configured to create a representation 306 of the cable infrastructure 20 by using information from the 3D image 302 together with information from the cable routing map 309 for the at least one of the cables 21 and/or the at least one of the cable components 22, 23, 24, 25.

The representation 306 thus comprises information from the cable routing map 309 with the added information from the 3D image 302 for at least one of the cables 21 and/or at least one cable component 22, 23, 24, 25 of in the cable infrastructure 20.

This process can also involve using information from the cable routing map 309 related to additional cables and/or cable components in the cable structure 20 to create the representation. In that case, the representation 306 of the cable infrastructure 20 has more information regarding the cable 21 and/or cable component 22, 23, 24, or 25 for which the 3D image 302 has been captured, thus providing a user with better insight. In other words, the representation 306 can in its simplest version comprise information from the cable routing map 309 and from a 3D image 302 for one single cable or cable component, where the added insight comes from the 3D image 302 which will give the user information of the actual state of the cable 21 or cable component 22, 23, 24, 25 when the 3D image 302 was captured. The user will for example be able to inspect the surface of the cable or cable component, become aware of unknown bends which may originate from the installation process or from unexpected terrain characteristics, etc. Another version of the representation 306 can comprise information from the cable routing map 309 for the complete cable infrastructure 20, but where information from the 3D image 302 of only one cable 21 or cable component 22, 23, 24, 25 is used. The user will still have more insight than could be realized from the cable routing map 309 alone, and by repeating the process described above, for other cables 21 and/or cable components 22, 23, 24, 25 of the cable infrastructure 20, the representation 306 can be improved with more information. The representation system 30 further comprises a user interface 307 configured to visualize the representation 306 of the cable infrastructure 20. The user interface 307 can for example be a display unit. Typically, the user interface 307 will be a laptop, a tablet, a smart phone etc.

The user interface 307 may further comprise input means 305 that can be used to input information that can be used to manipulate the visualization, for example zoom in or out, or so that clicking at a location in the electric circuit or overview can take the operator to this location in the visualization, and vice-versa.

The input means 305 can additionally or alternatively be a connector or other signal communication means that can connect the user interface 307 to external devices to supply new or updated data related to cables 21 and cable components 22, 23, 24, 25 of the cable infrastructure 20 for example from external systems. For example the input means 305 may provide connection to a library of electric drawings of cables and cable components, or the input means 305 may provide the possibility of sending other relevant information related to the cables 21 and cable components 22, 23, 24, 25 of the cable infrastructure 20 to the computing device. The user may select relevant publications from the library and add them to the computing device 303 via the user interface 307.

The computing device 303 will here receive the data from the input means 305 and can associate the new or updated data with their corresponding cable 21 or cable components 22, 23, 24, 25 of the cable routing map 309, to further provide more details to the representation 306.

The 3D capturing device 301 can be configured to provide a sequence 312 of 3D images 302 of the at least one of the cables 21 and/or at least one of the cable components 22, 24, 25 of the cable infrastructure 20 at different points in time t1, t2, t3.

The computing device 303 then stores the 3D images 302 of the at least one of the cables 21 and/or the at least one of the cable components 22, 24, 25 together with a time parameter t1, t2, t3 representing the point in time at which the 3D image 302 was provided by the 3D capturing device, as well as together with a specific location for each 3D image, and creates the representation 306 of the cable infrastructure 20 by using information from the sequence 312 of 3D images 302 together with information from the cable routing map 309 for the at least one of the cables 21 and/or the at least one of the cable components 22, 24, 25.

In that way, by looking at the visualization of the representation 306 on the user interface 307 of the cable infrastructure 20, an operator can see changes over time, and thus if there has been a change of that specific cable or cable component, which may lead to a failure at a later stage or which should be inspected manually.

Other types of information can also be associated with some of or all the cables 21 and/or the cable components 22, 23, 24, 25, such as an electric drawing 310 for at least one of the cables 21 and/or at least one of the cable components 22, 23, 24, 25. Other examples of types of information are design drawings outlining the design of a cable or cable component, higher resolution 3D files (such as surface inspections, or other data obtained with higher resolution scanning techniques such as laser scanning or optical profilometry) and an overview circuit diagram of the cable infrastructure 20.

The computing device 303 can then be configured to store the electric drawing 310 of at least one of the cables 21 and/or the at least one of the cable components 22, 24, 25, associate the at least one of the cables 21 and/or the at least one of the cable components 22, 24, 25 of the electric drawing together with their corresponding cable or cable components of the cable routing map 309, and the representation 306 of the cable infrastructure 20 can be created by using information from the electric drawing 310 together with information from the cable routing map 309 for the at least one of the cables 21 and/or the at least one of the cable components 22, 24, 25.

Similarly, the computing device 303 can be configured to store other types of information

The computing device 303 can be connected to a monitoring unit 308 which for example can detect an event that occurs in the cable infrastructure 20, for example high temperature, electric or mechanical failure, etc. and activate an alarm and create an alarm message. The monitoring unit can be an external device or system that separately monitors at least parts of the cable infrastructure 20.

The computing device 303 can be configured to receive this alarm message and associate the alarm message with at least one of the cables 21 and/or at least one of the cable components 22, 24, 25, and the representation 306 of the cable infrastructure 20 can be re-created by using the alarm message together with information from the cable routing map 309 for the at least one of the cables 21 and/or the at least one of the cable components 22, 24, 25.

The user interface 307 can visualize the alarm message in the representation 306 of the cable infrastructure 20, thereby alerting the user to any problem in the cable infrastructure 20.

The representation system 30 can further comprise least one sensor 304, which can for example monitor thermal and/or electrical properties of at least one of the cable 21 and/or cable components 22, 23, 24, 25 in the cable infrastructure 20.

Such sensors may be sensors for measuring leakage currents in HVDC cable infrastructures, sensors for measuring resistive currents in HVAC infrastructures (of 1kV and above), fiber optic-based temperature sensors, or other conventional temperature sensors, etc.

The computing device 303 can receive the sensor data for the at least one cable 21 and/or cable component 22, 23, 24, 25, and use the sensor data to simulate the thermal and electrical fluxes in at least some of the cables 21 and/or cable components 22, 23, 24, 25.

The simulated thermal and electrical fluxes can be stored together with a specific location for the 3D image 302 and associated with their corresponding cable or cable components of the cable routing map 309 based on the specific location of the 3D image 302.

The computing device 303 can also or alternatively be configured to perform digital twin modelling of the at least one cable 21 and/or cable components 22, 24, 25 based on the sensor data from the at least one sensor 304, and the simulated thermal and electrical fluxes and can generate a digital twin. The digital twin can be used to perform monitoring of the at least one cable 21 and/or the at least one cable component 22, 24, 25 of the cable infrastructure 20.

The computing device 303 can also be configured to create a report 311 of aspects of the cable infrastructure 20. The report 311 may for example comprise one of or a combination of:
- data from the at least one sensor 304,
- the monitoring of the at least one cable 21 and/or the at least one cable component 22, 24, 25 of the cable infrastructure 20 performed by the digital twin,
- time and/or location for 3D image 302 provided by the 3D capturing device 301.

Fig. 3 is a schematic illustration of an example of a 3D capturing device 301 for providing a 3D image 302 of elements of a cable infrastructure 20, such as a cable 21 and/or cable components 22, 23, 24, 25.

In this example, the 3D capturing device 301 is a scanning system for scanning the surface 5 and/or interfaces of cables or cable components, in this example a cable end 1. The sizes of various object of the illustration are not in scale. The scanning system comprises a non-contact surface scanner 40. The non-contact surface scanner 40 is directable to an area of interest 45 of the cable end 1.

In one embodiment, the non-contact surface scanner 40 may be a 3D laser scanner. The scanner may also be other types of non-contact surface scanners, for example white line scanners using projected white lines able to project up to 1,500,000 measurements/s and/or white light scanning lines, or other kinds of suitable scanners.

The non-contact surface scanner 40 is arranged to measure the distance to the surface 5 of the area of interest. In the example in the figure, the field-of-view of the non-contact surface scanner corresponds to the area of interest, but the area of interest 45 on the surface 5 may be larger or smaller than the field-of-view or scanning area of the non-contact surface scanner 40. The field-of-view may be round, rectangular, linear or any other shape as determined by the non-contact surface scanner. The non-contact surface scanner 40 is movable around the cable 1 such that the surface 5 of the cable 1 is covered by a plurality of sub-areas in order to ensure that the entire area of interest is scanned. The size of plurality of sub-areas may vary, for example by varying the distance between the non-contact surface scanner 10 and the cable 1. In one embodiment the non-contact surface scanner 10 is freely movable in any direction around the cable 1, such as a handheld 3D laser scanner.

The non-contact surface scanner 40 stores its position and direction in 3D space, for example by recognizing a plurality of markers (not shown) positioned on the surface 5. The markers may be stickers or sterile clamps with specific patterns or markers thereon. The markers will result in "NaN" (not a number = empty) areas underneath them, however, the scan can be paused, markers/clamps relocated and then the measurement can also scan the area under the markers. In another embodiment the non-contact surface scanner 40 may be mounted to a fixture or jig, e.g. mountable to the HV-cable, such that the non-contact surface scanner 40 may be moved up/down and around the surface 5 to completely fill the area of interest 5 with sub-areas. In this way, using markers may be avoided. In other embodiments, the non-contact surface scanner 10 can be arranged in a fixture or jig, and the cable may be moved relative to the scanner 10.

In some embodiments, the geometry of the scanned surface itself may be used as reference for the position of the non-contact surface scanner 40 itself in 3D space.

The illustrated scanning system also comprises an analysis unit 42. The analysis unit 42 is in communication with the non-contact surface scanner 40 over a wired or wireless communication link. In one embodiment, at least parts of the analysis unit 42 may be comprised in the non-contact surface scanner 40. The analysis unit 42 comprises a computing device 43 adapted to process measurement data from the non-contact surface scanner 40 for each of the plurality of sub-areas to create a continuous 3D surface geometry measurement of the area of interest 45, and thus the surface to be evaluated. The continuous 3D surface geometry measurement can be processed to evaluate the characteristics of the surface and can also create a 3D image (302) of the surface for evaluation and for later reference.

In one embodiment, the analysis unit 42 is adapted to transmit the continuous 3D surface geometry measurement to a storage device 44 as a 3D topographic map of the area of interest 45. The analysis unit 42 is in communication with the storage device 44 over a wired or wireless communication link. The storage device 44 may be on on-premise server or cloud server. The 3D topographic map of the surface 5 of the cable 1 on the server 44 may be accessible to users and clients for future reference of the cable infrastructure 20.

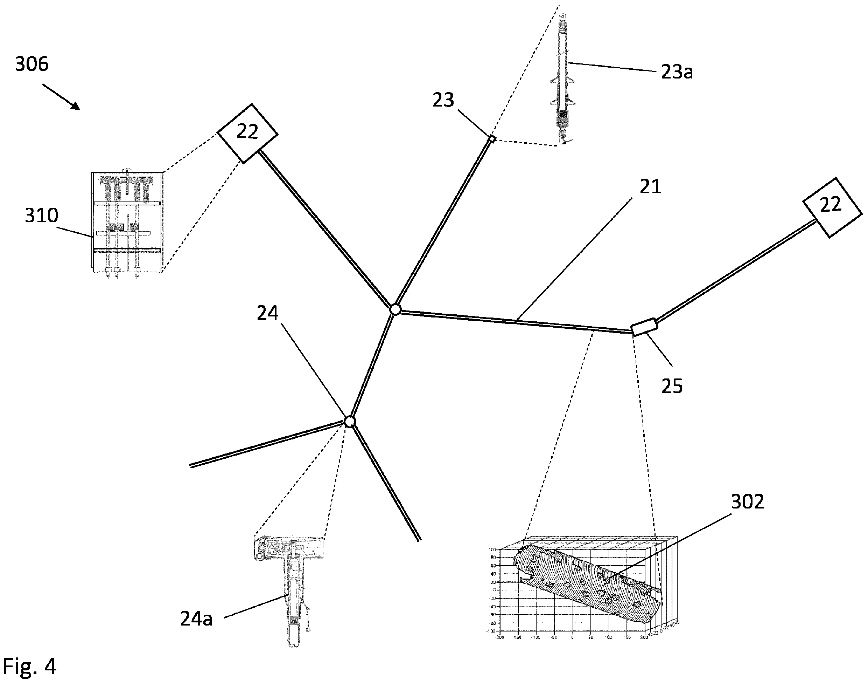

Figure 4 illustrates schematically an example of a representation 306 of the cable infrastructure 20 in figure 1 provided by means of the representation system 30.

The representation 306 have been created using information from cable routing map 309 together with a 3D image 302 of a cable 21 which is associated with the cable 21. The representation 306 has further been created using information from a drawing 24a of cable component 24 which is a tee connector, a drawing 23a of a heat shrink cable termination 23, and electric drawing 310 of a cable component 22 (offshore junction cabinet).

## Claims

1. A representation system (30) for providing a representation (306) of an installed cable infrastructure (20), wherein the cable infrastructure (20) comprises a plurality of cables (21) and cable components (22, 23, 24, 25) connected to each other, wherein the representation system (30) comprises a 3D capturing device (301) for providing a 3D image (302) of at least one of the cables (21) and/or at least one of the cable components (22, 23, 24, 25) of the cable infrastructure (20);
wherein the representation system (30) comprises a computing device (303) in which a cable routing map (309) for the cable infrastructure (20) is stored, wherein the computing device (303) is configured to:
- store the 3D image (302) of at least one of the cables (21) and/or at least one of the cable components (22, 23, 24, 25) together with a specific location for the 3D image (302);
- associate the at least one of the cables (21) and/or the at least one of the cable components (22, 23, 24, 25) from the 3D image (302) with their corresponding cable or cable component in the cable routing map (309) based on the specific location of the 3D image;
- create the representation (306) of the cable infrastructure (20) by using information from the 3D image (302) together with information from the cable routing map (309) for the at least one of the cables (21) and/or the at least one of the cable components (22, 23, 24, 25);
wherein the representation system (30) comprises a user interface (307) configured to visualize the representation (306) of the cable infrastructure (20).

2. The representation system (30) according to claim 1, wherein the 3D capturing device (301) is configured to provide a sequence of 3D images (302) of the at least one of the cables (21) and/or at least one of the cable components (22, 23, 24, 25) of the cable infrastructure (20) at different points in time, and
wherein the computing device (303) further is configured to:
- store the 3D images (302) of the at least one of the cables (21) and/or the at least one of the cable components (22, 23, 24, 25) together with a time parameter representing the point in time at which the 3D image (302) was provided by the 3D capturing device, and
- create the representation (306) of the cable infrastructure (20) by using information from the sequence of 3D images (302) together with information from the cable routing map (309) for the at least one of the cables (21) and/or the at least one of the cable components (22, 23, 24, 25).

3. The representation system (30) according to claim 1 or 2, wherein the computing device (303) is configured to:
- store an electric drawing (310) of at least one of the cables (21) and/or the at least one of the cable components (22, 23, 24, 25);
- associate the at least one of the cables (21) and/or the at least one of the cable components (22, 23, 24, 25) of the electric drawing together with their corresponding cable or cable components of the cable routing map (309), and
- create the representation (306) of the cable infrastructure (20) by using information from the electric drawing (310) together with information from the cable routing map (309) for the at least one of the cables (21) and/or the at least one of the cable components (22, 23, 24, 25).

4. The representation system (30) according to any of the claims 1-3, wherein the computing device (303) is configured to:
- receive an alarm message and associate the alarm message with at least one of the cables (21) and/or at least one of the cable components (22, 23, 24, 25), and
- create the representation (306) of the cable infrastructure (20) by using the alarm message together with information from the cable routing map (309) for the at least one of the cables (21) and/or the at least one of the cable components (22, 23, 24, 25).

5. The representation system (30) according to any of the previous claims, wherein the user interface (307) comprises input means (305) and wherein the computing system (307) is configured to:
- store user information related to at least one of the cables (21) and/or at least one of the cable components (22, 23, 24, 25), where the user information is received via the user interface (307),
- associate the user information related to at least one of the cables (21) and/or the at least one of the cable components (22, 23, 24, 25) with their corresponding cable or cable components of the cable routing map (309), and
- create the representation (306) of the cable infrastructure (20) by using information from the user information related to at least one of the cables (21) and/or at least one of the cable components (22, 23, 24, 25) together with information from the cable routing map (309) for the at least one of the cables (21) and/or the at least one of the cable components (22, 23, 24, 25).

6. The representation system (30) according to any of the previous claims, wherein the representation system (30) comprises at least one sensor (304) for monitoring thermal and/or electrical properties of at least one of the cables (21) and/or at least one of the cable components (22, 23, 24, 25) of the cable infrastructure (20) and wherein the computing device (303) is configured to store sensor data from the at least one sensor (304) for the at least one cable (21) and/or the at least one cable component (22, 23, 24, 25).

7. The representation system (30) according to claim 6, wherein the computing device (303) is configured to:
- use the sensor data from the at least one sensor (304) to simulate thermal and/or electrical fluxes in the at least one of the cables (21) and/or at least one of the cable components (22, 23, 24, 25);
- store the simulated thermal and/or electrical fluxes together with the specific location for the at least one sensor (304);
- associate the simulated thermal and electrical fluxes for the at least one of the cables and/or the at least one of the cable components with their corresponding cable or cable components of the cable routing map (309) based on the specific location of the at least one sensor (304); and
- create the representation (306) of the cable infrastructure (20) by using information from the simulated thermal and/or electrical fluxes together with information from the cable routing map (309) for the at least one of the cables (21) and/or the at least one of the cable components (22, 23, 24, 25).

8. The representation system (30) according to claim 6, wherein the computing device (303) is configured to:
- use the sensor data from the at least one sensor (304) to simulate thermal and/or electrical fluxes in the at least one of the cables (21) and/or at least one of the cable components (22, 23, 24, 25); and
- perform digital twin modelling of the at least one cable (21) and/or cable components (22, 23, 24, 25) based on the sensor data from the at least one sensor (304), and the simulated thermal and electrical fluxes and generate a digital twin, and
- use the digital twin to perform monitoring of the at least one cable (21) and/or the at least one cable component (22, 23, 24, 25) of the cable infrastructure (20).

9. A method for providing a representation (306) of an installed cable infrastructure (20), wherein the cable infrastructure (20) comprises a plurality of cables (21) and cable components (22, 23, 24, 25) connected to each other, and wherein the method comprises the following steps:
- providing a cable routing map (309) for the cable infrastructure (20);
- providing a 3D image (302) of at least one of the cables (21) and/or at least one of the cable components (22, 23, 24, 25) of the cable infrastructure (20) by using a 3D capturing device;
- storing the 3D image (302) together with a specific location for the 3D image;
- associating the at least one of the cables and/or the at least one of the cable components from the 3D image (302) with their corresponding cable or cable component in the cable routing map (309) based on the specific location of the 3D image;
- creating the representation (306) of the cable infrastructure (20) by using information from the 3D image (302) together with information from the cable routing map (309) for the at least one of the cables and/or the at least one of the cable components; and
- visualizing the representation (306) of the cable infrastructure (20) on a user interface (307).

10. The method according to claim 9, wherein the step of providing a 3D image (302) of at least one of the cables (21) and/or at least one of the cable components (22, 23, 24, 25) of the cable infrastructure (20) comprises the step of:
- providing a sequence of 3D images (302) of the at least one of the cables (21) and/or the at least one of the cable components (22, 23, 24, 25) of the cable infrastructure (20) at different points in time, and where the method further comprises the steps of:
- storing the 3D images (302) in the sequence of 3D images of the at least one of the cables (21) and/or at least one of the cable components (22, 23, 24, 25) together with a time parameter representing the point in time at which each 3D image (302) was captured,
- associating the at least one of the cables (21) and/or the at least one of the cable components (22, 23, 24, 25) from sequence of 3D images (302) with their corresponding cable or cable component in the cable routing map (309) based on the specific location of the 3D image; and
- creating the representation (306) of the cable infrastructure (20) by using information from the sequence of 3D images (302) together with information from the cable routing map (309) for the at least one of the cables (21) and/or the at least one of the cable components (22, 23, 24, 25).

11. The method according to claim 9 or 10, further comprising the steps of:
- storing an electric drawing (310) of at least one of the cables (21) and/or at least one of the cable components (22, 23, 24, 25),
- associate the at least one of the cables (21) and/or the at least one of the cable components (22, 23, 24, 25) of the electric drawing together with their corresponding cable or cable components of the cable routing map (309), and
- creating the representation (306) of the cable infrastructure (20) by using information from the electric drawings (310) together with information from the cable routing map (309) for the at least one of the cables (21) and/or the at least one of the cable components (22, 23, 24, 25).

12. The method according to any of the claims 9-11, further comprising the steps of:
- receiving an alarm message and associate the alarm message with at least one of the cables (21) and/or at least one of the cable components (22, 23, 24, 25), and
- creating the representation (306) of the cable infrastructure (20) by using the alarm message together with information from the cable routing map (309) for the at least one of the cables (21) and/or the at least one of the cable components (22, 23, 24, 25).

13. The method according to any of claims 9-12, comprising the steps of:
- storing user information related to at least one of the cables (21) and/or at least one of the cable components (22, 23, 24, 25), where the user information is received via the user interface,
- associate the user information related to at least one of the cables (21) and/or the at least one of the cable components (22, 23, 24, 25) with their corresponding cable or cable components of the cable routing map (309), and
- create the representation (306) of the cable infrastructure (20) by using information from the user information related to at least one of the cables (21) and/or at least one of the cable components (22, 23, 24, 25) together with information from the cable routing map (309) for the at least one of the cables (21) and/or the at least one of the cable components (22, 23, 24, 25).

14. The method according to any of claims 9-13, comprising the steps of:
- storing sensor data from at least one sensor (304) for the at least one cable (21) and/or cable component (22, 23, 24, 25), and use the sensor data from the at least one sensor (304) to simulate thermal and/or electrical fluxes in the at least one of the cables (21) and/or at least one of the cable components (22, 23, 24, 25);
- storing the simulated thermal and/or electrical fluxes together with the specific location for the 3D image;
- associating the simulated thermal and electrical fluxes for the at least one of the cables and/or the at least one of the cable components with their corresponding cable or cable components of the cable routing map (309) based on the specific location of the 3D image; and
- creating the representation (306) of the cable infrastructure (20) by using information from the simulated thermal and/or electrical fluxes together with information from the cable routing map (309) for the at least one of the cables (21) and/or the at least one of the cable components (22, 23, 24, 25).
